# FASCICULE DE BREVET EUROPEEN

(11) **EP 1 692 563 B1**
(45) Date de publication et mention de la délivrance du brevet: **26.06.2013**
(21) Numéro de dépôt: 04805378.9
(22) Date de dépôt: 04.11.2004
(51) Int. Cl.: G02C 13/00

(54) **DISPOSITIF DE DETECTION AUTOMATIQUE DE REPERES D'UNE LENTILLE OPHTALMIQUE**
EINRICHTUNG ZUR AUTOMATISCHEN ERKENNUNG DER INDEXMARKIERUNGEN EINER BRILLENLINSE
DEVICE FOR AUTOMATIC DETECTION OF THE INDEX MARKS OF AN OPHTHALMIC LENS

(30) Priorité: 10.12.2003 FR 0314462
(43) Date de publication de la demande: 23.08.2006
(73) Titulaire: ESSILOR INTERNATIONAL (Compagnie Générale d'Optique), 94227 Charenton (FR)
(72) Inventeur: DIVO, Fabien, Essilor International, F-94227 Charenton (FR); LEMAIRE, Cédric, Essilor International, F-94227 Charenton (FR)
(74) Mandataire: Chauvin, Vincent
(86) Numéro de dépôt international: PCT/FR2004/002827
(87) Numéro de publication internationale: WO 2005/066692

(56) Documents cités:
- FR-A- 2 799 545
- US-A- 5 428 448
- US-A- 5 754 272
- US-A- 5 855 074
- US-A- 5 973 772
- US-A1- 2002 085 196

## Description

La présente invention concerne de manière générale la détection de repères sur une lentille ophtalmique.

Elle concerne plus particulièrement un dispositif de détection comportant un support adapté à recevoir ladite lentille et, de part et d'autre de ce support, d'une part, des premiers moyens d'éclairement de la lentille ophtalmique installée sur ledit support et, d'autre part, des premiers moyens d'acquisition et d'analyse de la lumière transmise par ladite lentille.

L'invention trouve une application particulièrement avantageuse dans la détection automatique de diverses caractéristiques d'une lentille ophtalmique à addition progressive de puissance et notamment dans la vérification d'au moins une caractéristique de repérage, telle qu'une caractéristique de centrage, d'axage, de localisation des points de référence pour la vision de loin et la vision de près, d'une telle lentille montée sur une monture.

Lors du montage d'une lentille progressive sur une monture, il est important pour le confort visuel du porteur de s'assurer du positionnement convenable de la lentille par rapport à l'oeil dont elle corrige un défaut de réfraction ou d'accommodation.

La lentille ophtalmique est centrée lorsque le centre de référence de la lentille prévu lors de la conception et le centre pupillaire de l'oeil sont alignés ou, autrement formulé, lorsque la ligne de regard passe par le centre de référence de la lentille. Le centrage résulte donc du rapprochement de deux données géométrico-optiques : la morphologie pupillaire du porteur et la position sur la lentille du centre de référence.

Lors de sa fabrication, toute lentille progressive est munie de repères provisoires sous la forme d'un marquage à la peinture et de repères permanents sous la forme de gravures. Les repères provisoires permettent un centrage commode de la lentille préalablement à son montage. Les repères permanents permettent d'identifier, sur la monture du patient, la nature de la lentille ophtalmique progressive, la valeur de l'addition ainsi que de vérifier ou rétablir, après effacement des repères provisoires, le repérage exact de ladite lentille. On comprend en effet que les repères provisoires seront effacés par l'opticien avant la remise des lunettes à son client et ils pourront, au besoin, être rétablis à partir des repères permanents gravés qui restent sur la lentille.

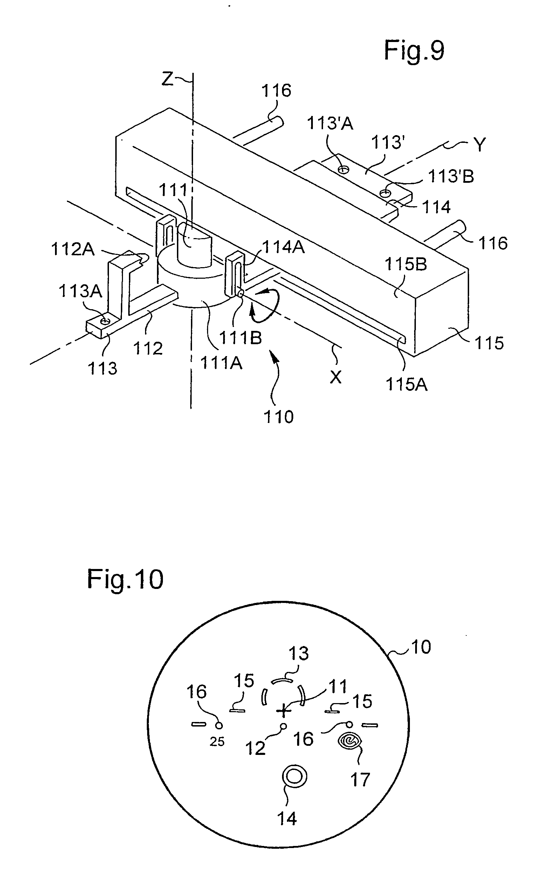

Plus précisément, comme le montre la figure 10, les repères provisoires comprennent habituellement :
- une croix 11 dite de montage ou centrage, matérialisant le centre de la zone de vision de loin destinée à être positionnée au centre de la pupille du porteur quand celui-ci regarde à l'infini droit devant lui ; elle permet de positionner en hauteur la progression de puissance de la lentille 10 par rapport à l'oeil, de telle sorte que le porteur trouve facilement, comme prévu par le concepteur de la lentille, la puissance correctrice dont il a besoin en vision de loin, en vision intermédiaire et en vision de près ;
- un point central 12 situé, selon les types de lentilles, de 2 à 6 mm au-dessous de la croix de montage 11 et qui localise le "centre optique" de la lentille 10 ; ce "centre optique" est conventionnellement, pour une lentille progressive, le point de «référence prisme »où est mesurée la puissance prismatique nominale de la lentille 10 correspondant à la prescription du porteur ;
- un cercle 13 de mesure de la puissance de vision de loin de la lentille, situé dans la partie supérieure de la lentille 10, juste au-dessus de la croix de montage 11, et qui localise le point de référence pour la vision de loin ; il s'agit donc du lieu où un frontofocomètre devra être placé pour mesurer la puissance de vision de loin de la lentille 10;
- un cercle 14 de mesure de la puissance de vision de près de la lentille, situé dans la partie inférieure de la lentille 10 et qui entoure le centre ou point de référence de la zone de vision de près ; ce centre est décentré du côté nasal de 2 à 3 mm et la distance qui le sépare de la croix de montage 11 constitue la longueur nominale de la progression de la lentille 10 ;
- un ou plusieurs traits 15 repérant l'horizontale de la lentille 10 et qui seront utilisés pour le centrage.

Comme le montre également la figure 10, les repères permanents comprennent en général :
- deux petits cercles ou signes 16 localisés sur l'horizontale de la lentille 10 passant par le centre optique et situés systématiquement à 17 mm de part et d'autre du centre optique 12; ces gravures permettent de retrouver le centrage horizontal et vertical de la lentille ;
- un signe 17 permettant d'identifier la marque et la nature exacte de la lentille progressive (par exemple V pour Varilux®) qui est gravé sous le petit rond ou signe nasal ;
- un nombre à 2 ou 3 chiffres représentant la valeur de l'addition (par exemple 30 ou 300 pour une addition de 3,00 D) qui est gravé sous le petit rond ou signe temporal.

Pour mémoire, on se souviendra que, pour les lentilles à foyers multiples présentant une ou plusieurs lignes de discontinuité de puissance, ces lignes tiennent lieu de repères permanents.

Le centrage d'une lentille progressive comporte deux composantes : l'une verticale, l'autre horizontale.

Le centrage vertical permet de positionner en hauteur la progression de puissance de la lentille devant l'oeil, de telle manière que ce dernier puisse trouver facilement, comme prévu par le concepteur de la lentille, la puissance correctrice dont il a besoin. La puissance de la correction de vision de loin doit être atteinte sur l'axe de la position primaire du regard et la puissance de vision de près sur l'axe du regard lors de l'abaissement de celui-ci pour la vision de près.

Ce centrage vertical s'effectue classiquement au moyen de la croix de centrage de vision de loin peinte à cet effet sur la lentille par le fabricant : il consiste à positionner la croix de centrage de la lentille devant le centre de la pupille de l'oeil du patient regardant à l'infini. Dans la pratique, l'opticien mesure la hauteur entre le bas de la monture et le centre de la pupille du porteur regardant à l'horizontale et positionne la croix de centrage de la lentille à la hauteur mesurée.

Le centrage horizontal consiste à positionner latéralement la lentille progressive par rapport à l'oeil de manière à ce que le porteur puisse en utiliser de manière optimale les zones de vision de loin, de vision intermédiaire et de vision de près.

Les études physiologiques ont fait ressortir que les centres pupillaires présentent, dans 25% des cas, une dissymétrie horizontale de plus de 1 mm par rapport au nez et, dans 60% des cas, un écart vertical de plus de 1 mm. Il est donc avantageux de pouvoir vérifier le centrage de chacune des deux lentilles indépendamment de l'autre et c'est pourquoi il est préférable de pouvoir mesurer les demi-écarts interpupillaires droit et gauche plutôt que seulement l'écart interpupillaire global.

Toutes les lentilles progressives possèdent, de construction, un positionnement relatif des zones de vision de loin et de vision de près, avec un décentrement nasal de la zone de vision de près par rapport à la zone de vision de loin.

Le centrage horizontal de la lentille peut donc s'effectuer, soit par rapport à la vision de près, soit par rapport à la vision de loin (cas le plus usuel).

Le centrage par rapport à la vision de loin consiste à mesurer les demi-écarts interpupillaires droit et gauche du patient regardant en vision de loin, c'est-à-dire les distances qui séparent la racine du nez du centre des pupilles (ou plus précisément des reflets cornéens) de l'oeil droit et de l'oeil gauche. Les croix de montage de vision de loin de la lentille de droite et de la lentille de gauche sont alors positionnées à ces distances du plan médian ou nasal de la monture.

La lentille étant convenablement orientée autour de son axe optique ou central, avec les traits horizontaux (ou les cercles gravés) alignés suivant l'horizontale de la monture, la zone de vision de près se trouve, par la construction de la lentille, convenablement décentrée du côté nasal de 2 à 3 mm par rapport à la vision de loin.

Le centrage par rapport à la vision de près, plus rarement réalisé, s'effectue de la manière analogue par la mesure des demi-écarts interpupillaires du patient regardant en vision de près et par le positionnement du centre de la zone de vision de près des lentilles de gauche et de droite à ces distances.

Cette seconde méthode présente un intérêt particulier en cas de convergences dissymétriques entre l'oeil droit et l'oeil gauche.

On connaît déjà différents appareils, qui fonctionnent soit automatiquement, soit manuellement, pour détecter les diverses caractéristiques d'une lentille ophtalmique progressive montée sur une monture.

Le frontofocomètre est l'appareil optique qui permet de déterminer automatiquement et directement les puissances optiques frontales (sphériques, cylindrique, prismatique) d'une lentille ophtalmique par le repérage des focales de la lentille à mesurer, et de localiser le centre optique d'une lentille unifocale.

La plupart des frontofocomètres fonctionnent à partir du même principe optique, tel que décrit dans le document « Paraxial Optics » de W.F. Long, dans Visual Optics and Instrumentation, Ed. N. Charman, Macmillan Press, London 1991, pages 418-419.

Les frontofocomètres déjà connus peuvent être équipés d'un système de marquage et de maintien de la lentille non montée (avec doigts d'appui ou pince à lentille) du type de ceux qui sont commercialisés sous la marque Essilor ACL 60 par la société Visionix ou sous la marque Essilor CLE 60 par la société japonaise Shin Nippon.

Le tensiscope est un appareil, actuellement entièrement manuel, qui permet à l'opticien de détecter et de localiser les tensions existantes dans les lentilles ophtalmiques montées pour vérifier que chaque lentille ophtalmique est correctement montée sur la monture.

Les tensions dans une lentille ophtalmique montée sont dues à un mauvais usinage de la lentille qui est trop grande par rapport au cercle de la monture qui la reçoit. La lentille est alors contrainte dans la monture ce qui génère des tensions pouvant la détériorer.

Le principe utilisé dans le tensiscope consiste à mettre en évidence la biréfringence de la lentille (l'indice de la lentille n'est plus isotrope, mais dépend de la direction de polarisation de la lumière), cette biréfringence étant liée aux contraintes subies par ladite lentille.

Pour mettre en évidence cette biréfringence, le tensiscope comporte, d'une part, une source de lumière homogène, polarisée linéairement à l'aide d'un polariseur disposé juste après la source de lumière, qui éclaire la lentille ophtalmique montée, et, d'autre part, un second polariseur disposé après la lentille au travers duquel l'opticien regarde la lentille ophtalmique éclairée.

En cas d'absence de tensions, la lentille ophtalmique éclairée apparaît homogène à l'opticien.

En cas de tensions, l'opticien voit apparaître des franges colorées ou nuancées dans ladite lentille ophtalmique éclairée, les franges étant d'autant plus serrées à un endroit que la lentille est contrainte à cet endroit.

Au vue des franges colorées ou nuancées observées, l'opticien doit alors évaluer la valeur de la reprise à effectuer sur ladite lentille pour que son montage sur la monture soit correct, c'est-à-dire sans contrainte.

L'appareil d'identification d'une lentille à addition progressive de puissance appelé couramment « Pal Id » (Progressive addition lens Identifcation) est un appareil qui permet de localiser les repères permanents d'une lentille ophtalmique progressive en matière synthétique.

Cet appareil éclaire la lentille ophtalmique au travers d'un filtre à motifs pour faire apparaître les repères permanents sur ladite lentille.

Enfin, il existe des gabarits de perçage à placer sur la lentille ophtalmique pour localiser sur ladite lentille le lieu de perçage des trous de montage des branches d'une monture sans cercle.

Le document FR-A-2 799 545 décrit un dispositif permettant de détecter automatiquement des repères d' une lentille ophthalmique.

L'inconvénient majeur de ces appareils précités, distincts les uns des autres, est qu'ils sont à eux quatre très encombrants. En outre, le tensiscope et le Pal Id fonctionnent entièrement manuellement, ce qui rend leur utilisation fastidieuse par l'opticien.

Par rapport à l'état de la technique précité l'invention propose un dispositif qui permet avec les mêmes moyens d'acquisition de réaliser automatiquement, non seulement l'identification des repères permanents d'une lentille ophtalmique, mais également de mesurer une ou plusieurs autres caractéristiques de la lentille, notamment de mesurer les tensions de la lentille induite par son montage sur une monture, de déterminer directement la puissance optique frontale de la lentille ou de repérer les perçages d'un gabarit de monture de lunettes à verres percés.

Plus particulièrement, l'invention propose un dispositif tel que défini en introduction, caractérisé en ce qu'il comporte, entre lesdits premiers moyens d'éclairement et ledit support, un filtre à motifs activable et désactivable.

D'autres caractéristiques non limitatives et avantageuses du dispositif selon l'invention sont les suivantes :
- les premiers moyens d'acquisition et d'analyse sont aptes à traiter le signal en sortie du filtre à motifs activé pour déterminer la position des repères permanents de la lentille ophtalmique ;
- il comprend deux filtres polarisants, l'un disposé entre lesdits premiers moyens d'éclairement et ledit support, l'autre disposé entre ledit support et lesdits premiers moyens d'acquisition et d'analyse ;
- ledit filtre à motifs est formé par un écran à cristaux liquides ;
- l'écran à cristaux liquides forme également ledit filtre polarisant disposé entre lesdits premiers moyens d'éclairement et ledit support ;
- lesdits premiers moyens d'éclairement sont activables et désactivables ;
- il comprend des deuxièmes moyens d'éclairement activables et désactivables, adaptés à éclairer une lentille ophtalmique installée sur ledit support en lumière rasante, lesdits premiers moyens d'acquisition et d'analyse étant aptes à analyser le faisceau lumineux transmis par ladite lentille éclairée en lumière rasante ;
- lesdits premiers moyens d'acquisition et d'analyse comprennent une caméra numérique ;
- lesdits premiers moyens d'acquisition et d'analyse comprennent des moyens de traitement d'image adaptés à traiter le signal obtenu en sortie de la caméra et des moyens d'affichage du signal traité.
- lesdits premiers moyens d'acquisition et d'analyse comprennent entre le filtre polarisant aval et la caméra un système optique de renvoi de faisceaux lumineux comprenant une lentille convergente et un miroir incliné à 45°.
- il comprend un frontofocomètre incluant d'une part des troisièmes moyens d'éclairement disposés latéralement par rapport auxdits premiers moyens d'éclairement, et adaptés à élaborer un faisceau lumineux dirigé sur une lentille ophtalmique installée sur ledit support positionné en regard desdits troisièmes moyens d'éclairement, et, d'autre part, des deuxièmes moyens d'acquisition et d'analyse du faisceau lumineux transmis par ladite lentille installé sur ledit support;
- le support est déplaçable en translation suivant deux axes perpendiculaires.
- il comporte des moyens de mesure du déplacement du support par rapport à une position initiale ;
- lesdits moyens de mesure comprennent, pour mesurer le déplacement dudit support, des encodeurs incrémentaux ou au moins un pointeur passif qui, lorsqu'il est éclairé par lesdits premiers moyens d'éclairement, forme, en ombre, une image de repérage sur lesdits premiers moyens d'acquisition et d'analyse permettant de déterminer la position dudit support dans un référentiel fixe ;et
- chaque pointeur passif présente une ligne de contour externe ou interne polygonale, circulaire ou cruciforme.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est vue schématique en perspective du dispositif selon l'invention avec son support de lentille dans une première position ;
- la figure 2 est vue schématique en perspective du dispositif selon l'invention avec son support de lentille dans une deuxième position ;
- la figure 3 est une vue schématique de côté montrant les principaux composants internes du dispositif de la figure 1 fonctionnant en mode tensiscope ;
- les figures 4A et 4B sont des vues schématiques de dessus de deux filtres à motifs différents pour le dispositif selon l'invention ;
- la figure 5 est une vue schématique de côté montrant les principaux composants internes du dispositif de la figure 1 fonctionnant en mode Pal Id pour les lentilles ophtalmiques en matière synthétique;
- la figure 6 est une vue schématique de côté montrant les principaux composants internes du dispositif de la figure 1 fonctionnant en mode Pal Id pour les lentilles ophtalmiques en matière minérale ;
- la figure 7 est une vue schématique de dessus d'un mode de réalisation du support du dispositif de la figure 1 positionné dans la deuxième position ;
- la figure 8 est une vue schématique de dessus d'un mode de réalisation du support du dispositif de la figure 1 positionné dans la première position ;
- la figure 9 est une vue schématique en perspective du support du dispositif de la figure 1 ; et
- la figure 10 est une vue schématique de dessus d'une lentille ophtalmique à addition progressive de puissance pourvue de ses repères provisoires et permanents.

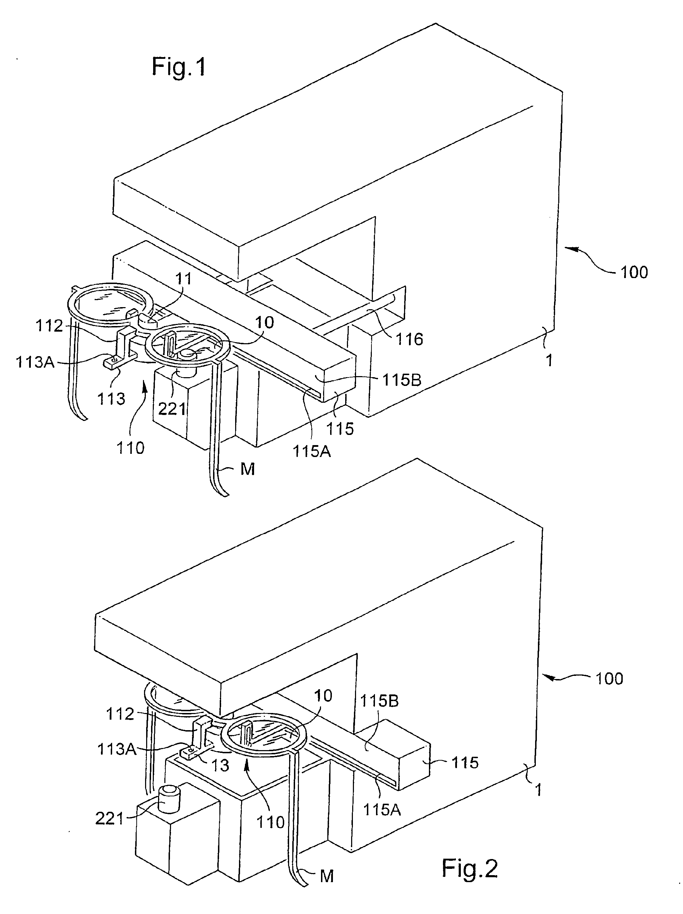

Sur les figures 1 et 2 on a représenté un dispositif 100 permettant de détecter automatiquement diverses caractéristiques d'une lentille ophtalmique 10 pourvue de repères.

Avantageusement, ce dispositif 100 intègre au moins trois fonctions différentes à savoir la fonction « Pal Id », la fonction tensiscope et la fonction frontofocomètre.

Ainsi, en mode « Pal Id », il permet de vérifier automatiquement au moins une caractéristique de centrage d'une lentille ophtalmique à addition progressive de puissance (en matière synthétique ou minérale) montée sur la monture d'un patient en déterminant la position des repères permanents de ladite lentille.

En mode tensiscope, il permet de détecter et de localiser automatiquement les tensions existantes dans les lentilles ophtalmiques montées pour vérifier que chaque lentille ophtalmique est correctement montée sur la monture.

En mode frontofocomètre, il permet de mesurer ou de vérifier la puissance en un point de référence d'une lentille ophtalmique à addition progressive de puissance ou de repérer et de mesurer les puissances d'une lentille ophtalmique unifocale.

Le dispositif 100 comporte un bâti 1, formant boîtier contenant différents éléments optiques, sur lequel est monté un support 110 adapté à recevoir une monture de lunettes pourvue de lentilles ophtalmique 10.

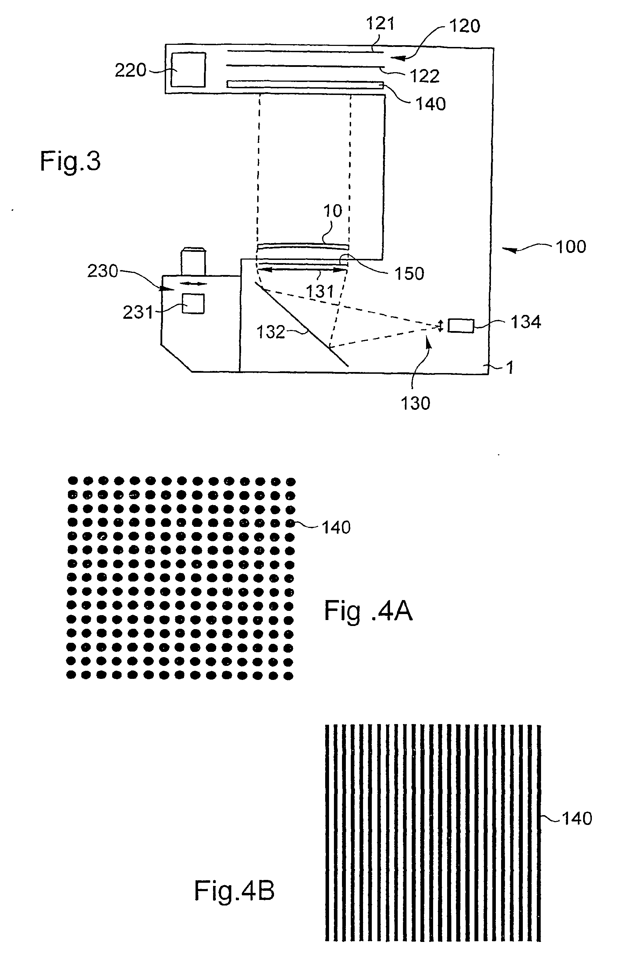

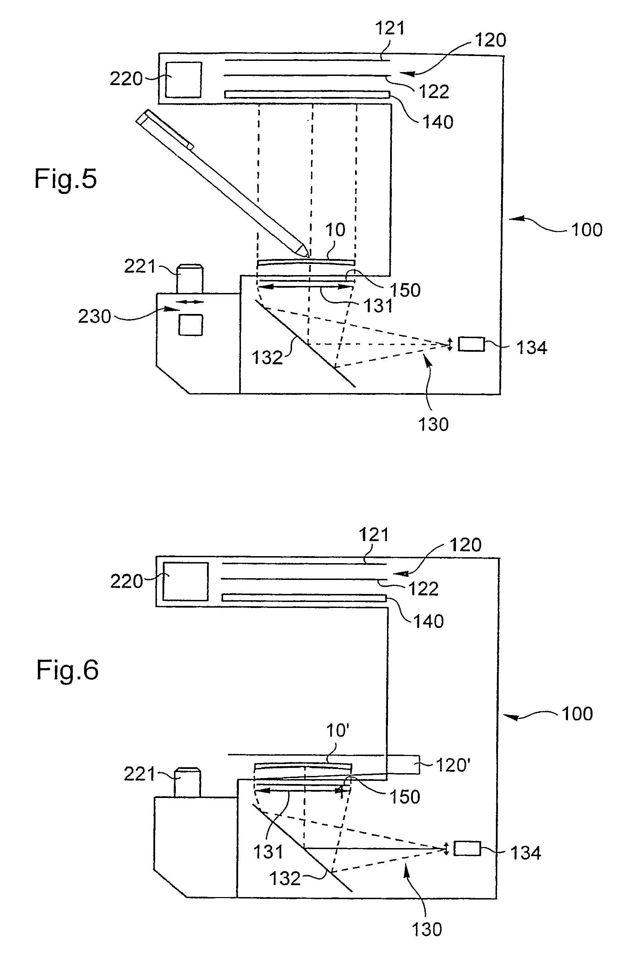

Comme le montrent les figures 3 et 5, le dispositif 100 comporte de part et d'autre du support 110, d'une part, des premiers moyens d'éclairement 120 de la lentille ophtalmique 10 installée sur le support 110 et, d'autre part, des premiers moyens d'acquisition et d'analyse 130 de la lumière transmise par ladite lentille 10.

Préférentiellement, lesdits premiers moyens d'éclairement 120 sont activables et désactivables.

Ils comprennent une source de lumière blanche 121 et un diffuseur 122 pour éclairer la lentille ophtalmique 10 avec une lumière diffuse.

Les premiers moyens d'acquisition et d'analyse 130 comprennent ici une caméra numérique 134. Ils comprennent en outre, entre un filtre polarisant aval 150 et la caméra numérique 134, un système optique de renvoi de faisceaux lumineux comprenant une lentille convergente 131 et un miroir 132 incliné à 45°. Lesdits premiers moyens d'acquisition et d'analyse 130 comprennent également des moyens de traitement d'image (non représentés) adaptés à traiter le signal obtenu en sortie de la caméra 134 et des moyens d'affichage (non représentés) du signal traité.

Comme le montrent les figures 5 et 6, pour exercer la fonction « Pal Id » sur des lentilles ophtalmiques en matière synthétique, le dispositif 100 comporte, entre lesdits premiers moyens d'éclairement 120 et ledit support 110, un filtre à motifs 140 répétés et réguliers activable et désactivable.

Ce filtre à motifs 140 est avantageusement formé par un écran à cristaux liquides (LCD).

Les figures 4A et 4B montrent deux filtres à motifs 140 différents activés, l'un comportant une trame de points noirs sur fond transparent, l'autre une trame de rayures noires sur fond transparent.

Le dispositif 100 comprend également deux filtres polarisants, à savoir un filtre polarisant amont disposé entre lesdits premiers moyens d'éclairement 120 et ledit support 110, et un filtre polarisant aval 150 disposé entre ledit support 110 et lesdits premiers moyens d'acquisition et d'analyse 130.

Ces deux filtres polarisants associés aux premiers moyens d'éclairement 120 et aux premiers moyens d'acquisition et d'analyse 130 permettent au dispositif 100 d'exercer la fonction tensiscope (voir figure 3). La polarisation des deux filtres est ménagée suivant une direction commune (et non pas selon deux directions perpendiculaires comme dans un tensiscope classique à filtres polariseurs croisés), de façon à permettre la mise en oeuvre des autres fonctions et en particulier de la fonction « Pal Id » sans blocage de la lumière par les deux filtres. On comprend en effet qu'une combinaison de filtres croisés bloquerait la lumière dans les zones de la lentilles dépourvues de tensions, ce qui s'opposerait à tout autre repérage ou mesure sur celle-ci. De plus, cette direction commune de polarisation des deux filtres doit être sensiblement identique à la direction de polarisation de la lentille à analyser. A défaut, les zones non tendues de la lentille « bloqueraient » la lumière en combinaison avec les deux filtres, ce qui s'opposerait à nouveau à toute identification ou mesure sur cette lentille. En pratique la polarisation sera donc, généralement, horizontale par référence à la configuration d'utilisation de la lentille.

Lorsqu'il est activé, le filtre à motifs 140 sert à faire apparaître les repères permanents de la lentille ophtalmique 10 en matière synthétique placée sur ledit support 110, interposée entre lesdits premiers moyens d'éclairement 120 et lesdits premiers moyens d'acquisition et d'analyse (fonction « Pal Id »). Lorsqu'il est désactivé, l'écran à cristaux liquides formant le filtre à motifs 140 permet d'effectuer une autre mesure sur ladite lentille ophtalmique 10 puisqu'il forme également le filtre polarisant amont disposé entre lesdits premiers moyens d'éclairement et la lentille (fonction tensiscope).

Comme le montre la figure 6, le dispositif 100 comprend par ailleurs des deuxièmes moyens d'éclairement 120' activables et désactivables, adaptés à éclairer en lumière rasante une lentille ophtalmique 10' en matière minérale installée sur ledit support 110, lesdits premiers moyens d'acquisition et d'analyse 130 étant aptes à analyser le faisceau lumineux transmis par ladite lentille 10' éclairée en lumière rasante. Ces deuxièmes moyens d'éclairement 120' permettent de faire apparaître les repères permanents sur des lentilles ophtalmiques en matière minérale (fonction « Pal Id »). Bien entendu pour ce fonctionnement, les premiers moyens d'éclairement 120 doivent être désactivés au profit des deuxièmes moyens d'éclairement 120'.

Comme le montrent plus particulièrement les figures 3 et 5, pour exercer la fonction frontofocomètre, le dispositif 100 comprend des moyens de mesure de puissance adaptés à mesurer en un point de référence la puissance de la lentille ophtalmique 10. Dans l'exemple proposé, ces moyens de mesure de puissance comprennent des troisièmes moyens d'éclairement 220 disposés latéralement par rapport auxdits premiers moyens d'éclairement 120, et adaptés à élaborer un faisceau lumineux dirigé sur une lentille ophtalmique installée sur ledit support 110 positionné en regard desdits troisièmes moyens d'éclairement 220. Il comprend également en aval d'un embout frontofocomètre 221 incluant un masque d'Hartmann, des deuxièmes moyens d'acquisition et d'analyse 230 du faisceau lumineux transmis par ladite lentille installée sur ledit support 110 en regard dudit embout frontofocomètre 221. Ces deuxièmes moyens d'acquisition et d'analyse 230 comprennent une caméra 231.

Comme le montrent les figures 1 et 2, le support 110 est plus particulièrement adapté à supporter une monture de lunettes M d'un patient.

Il comporte à cet effet un nez 111 et une mâchoire de serrage 112 aptes à serrer la monture de lunettes M (voir figure 9).

Le nez 111 est un demi-cylindre qui s'élève à partir d'un pied 111A cylindrique. La mâchoire de serrage 112 est rattachée au pied 111 A cylindrique, elle comporte une partie en forme de L inversé dont une extrémité libre comprend une encoche 112A faisant face au nez 111.

Ainsi, le nez de la monture M repose sur le pied 111A cylindrique et est serré entre ladite encoche 112A de la mâchoire de serrage 112 et ledit nez 111.

Avantageusement, la mâchoire de serrage 112 est déplaçable en translation par rapport audit nez 111 tout en étant en permanence rappelée dans une position initiale par rapport à ce dernier par un moyen élastique de rappel (un ressort non représenté) de manière à garantir un serrage correct du nez de la monture M et donc le maintien en position fixe de ladite monture M sur ledit support 110.

Plus particulièrement, la mâchoire de serrage 112 comporte une tirette qui coulisse dans une rainure (non représentée) du pied 111A cylindrique qui contient le ressort de rappel en position de ladite mâchoire.

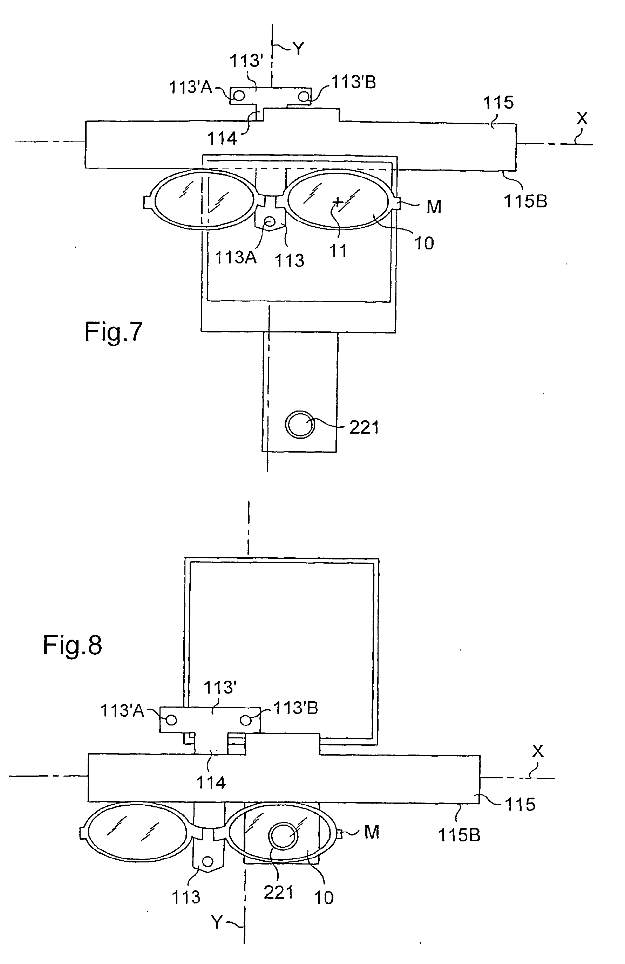

Avantageusement, le support 110 est déplaçable en translation dans un plan, suivant deux axes X, Y perpendiculairement entre eux pour prendre différentes positions de mesure des caractéristiques de la lentille ophtalmique 10 correspondant aux différents modes de fonctionnement du dispositif 100 comme cela sera expliqué plus en détail ultérieurement (voir figures 7 et 8).

Pour ce faire, le nez 111 du support 110 est rattaché à une partie de coulissement 114 apte à coulisser dans une rainure 115A d'une réglette 115 s'étendant suivant l'axe X et la réglette 115 porte des tiges 116 qui s'étendent suivant l'axe Y et qui sont destinées à coulisser dans des conduits correspondants (non représentés) du bâti 1.

Avantageusement, ledit nez 111 rattaché à ladite partie de coulissement 114 par l'intermédiaire du pied 111A cylindrique est apte à être déplacé en translation suivant l'axe Y par rapport à ladite réglette 115 tout en étant en permanence rappelé dans une position initiale par rapport à ladite réglette 115 par un moyen élastique de rappel (ici un ressort non représenté). Cela permet de mettre en contact le bord inférieur de la monture M et le bord correspondant 115B de la réglette 115.

Préférentiellement, ledit support 110 est déplaçable suivant un troisième axe Z perpendiculaire aux deux premiers axes X, Y de déplacement. Cela permet, en mode frontofocomètre, de soulever le support 110 et donc la monture M pour placer l'une des lentilles ophtalmiques 10 puis l'autre dans la position de mesure adéquate sans venir heurter l'embout frontofocomètre 221. En outre, le nez 111 du support 110 est monté à pivotement sur ladite partie de coulissement 114. Comme le montre plus particulièrement la figure 9, le pied 111A cylindrique porte en saillie deux tétons 111 B alignés formant l'axe de pivotement X. Ces tétons 111 B sont montés dans des rainures formées dans deux oreilles 114A prévues en bout de ladite partie de coulissement 114. Ce pivotement du nez 111 du support 110 permet, en mode frontofocomètre, de placer correctement la lentille ophtalmique 10 correspondant par rapport à l'embout frontofocomètre 221.

Afin que le dispositif 100 puisse repérer la position du support 110 dans un référentiel fixe (représenté par le bâti 1), celui-ci peut comporter, selon un premier mode de réalisation, des moyens de mesure (non représentés) de son déplacement par rapport à une position initiale. Ces moyens de mesure comprennent des encodeurs incrémentaux tels que par exemple les encodeurs incrémentaux fabriqués (sous la référence RE20F-100-200) par la société COPAL ELECTRONICS.

Selon un mode de réalisation préférentiel, ledit support 110 comporte au moins un pointeur passif 113 ; 113' qui, lorsqu'il est éclairé par lesdits premiers moyens d'éclairement 120, forme, en ombre, une image de repérage sur lesdits premiers moyens d'acquisition et d'analyse 130 permettant de déterminer la position dudit support 110 dans le référentiel fixe.

Comme le montrent les figures 7 et 8, ledit support 110 étant mobile entre plusieurs positions de mesure des caractéristiques de ladite lentille, il comporte plusieurs pointeurs passifs 113,113' agencés de telle façon que l'un au moins de ces pointeurs passifs 113,113' est éclairé par lesdits premiers moyens d'éclairement 120 et forme, en ombre, une image de repérage sur lesdits premiers moyens d'acquisition et d'analyse 130, qu'elle que soit la position de mesure prise par ledit support 110.

Chaque pointeur passif 113,113' présente une ligne de contour externe ou interne 113A, 113A', 113B' polygonale, circulaire ou cruciforme.

Ici, le support 110 comporte, en avant de ladite mâchoire de serrage 112, un de ces pointeurs passifs formé par une languette 113 comportant une lumière 113A à contour polygonale, circulaire ou cruciforme.

Il comporte également en arrière de ladite réglette 115, à l'extrémité de ladite partie de coulissement 114, un autre de ces pointeurs passifs constitué par une languette 113' pourvue de deux lumières 113'A, 113'B à contour polygonale, circulaire ou cruciforme.

Ainsi, lorsque le dispositif 100 fonctionne en mode frontofocomètre sur une lentille ophtalmique 10 à addition de puissance progressive ou sur une lentille multifocale à discontinuité de puissance, il met en oeuvre un procédé pour la vérification de la puissance en un point de référence de ladite lentille, comprenant les étapes suivantes :
a) on positionne ladite lentille ophtalmique 10 sur ledit support 110,
b) on déplace ledit support 110 pour placer la lentille ophtalmique 10 en regard des premiers moyens d'éclairement 120 (voir figure 2),
c) on éclaire la lentille ophtalmique 10 à l'aide desdits premiers moyens d'éclairement 120 alors que le filtre à motifs est activé,
d) on recueille par la caméra numérique 134 desdits premiers moyens d'acquisition et d'analyse 130 la lumière transmise par la lentille ophtalmique 10,
e) on désactive le filtre à motifs,
f) on traite le signal sortant de ladite caméra numérique 134 pour déterminer la position des repères permanents 16 de la lentille ophtalmique 10 (voir figure 10) dans un référentiel fixe,
g) on mémorise cette position en tant que position initiale de ladite lentille ophtalmique 10,
h) on calcule (avec les encodeurs incrémentaux) le déplacement de ladite lentille ophtalmique 10 par rapport à ladite position initiale pour placer ledit point de référence en regard desdits moyens de mesure de puissance 220,230 (voir figure 1),
i) on déplace ledit support 110 conformément au déplacement calculé, et
j) on effectue la mesure de puissance audit point de référence.

Lorsque le dispositif 100 fonctionne en mode « Pal Id », son filtre à motifs 140 est activé. Il peut alors mettre en oeuvre un procédé pour la vérification d'au moins une caractéristique de centrage d'une lentille ophtalmique 10 à addition de puissance progressive, comprenant les étapes suivantes :
a) on acquiert une position initiale du support 110 dans un référentiel fixe,
b) on positionne la lentille ophtalmique 10 sur le support 110,
c) on déplace le support 110 pour placer la lentille ophtalmique 10 en regard desdits premiers moyens d'éclairement 120 (voir figure 2),
d) on mesure (avec les encodeurs incrémentaux) le déplacement du support 110 par rapport à sa position initiale,
e) on éclaire la lentille ophtalmique 10 à l'aide desdits premiers moyens d'éclairement 120,
f) on recueille par ladite caméra numérique 134 desdits premiers moyens d'acquisition et d'analyse 130 la lumière transmise par la lentille ophtalmique 10,
g) on traite le signal sortant de ladite caméra numérique 134 pour déterminer la position des repères permanents 16 de la lentille ophtalmique 10 dans ledit référentiel fixe, et
h) on déduit de la position initiale dudit support, du déplacement mesuré de celui-ci et de la position des repères permanents de ladite lentille ophtalmique 10, la valeur de ladite caractéristique de centrage.

Les caractéristiques de centrage sont classiquement le demi-écart interpupillaire et la hauteur de montage de la lentille ophtalmique 10 montée sur sa monture M.

Selon le procédé précité, la position du support 110 est déduite d'une position initiale déterminée lors de l'étape a) préliminaire d'initialisation et d'un déplacement mesuré du support 110 pour placer le lentille ophtalmique en regard des moyens d'éclairement 120 (étapes b) à d)).

Le dispositif 100 peut toutefois mettre en oeuvre un autre procédé de vérification d'au moins une caractéristique de centrage dans lequel on acquière par la caméra numérique 134 la position du support 110 à l'aide d'un de ces pointeurs passifs 113,113'.

Ce procédé comprend les étapes suivantes :
a) on positionne la lentille ophtalmique 10 sur le support 110 placé en regard du filtre à motifs 140 activé,
b) on éclaire au travers dudit filtre à motifs 140 la lentille ophtalmique 10 à l'aide d'une source de lumière diffuse 121,122,
c) on recueille par la caméra numérique 134 des premiers moyens d'acquisition et d'analyse 130 la lumière transmise par la lentille ophtalmique 10,
d) on traite le signal sortant de la caméra numérique 134 pour déterminer la position des repères permanents de la lentille ophtalmique 10 dans un référentiel fixe,
e) on détermine la position du support 110 dans le référentiel fixe,
f) on déduit de la position connue du support 110 et de la position des repères permanents de la lentille ophtalmique 10, la valeur de ladite caractéristique de centrage.

Avantageusement selon ce procédé, lors de l'étape e) on réalise simultanément l'étape f) où l'on recueille par la caméra au moins une image de repérage formée, en ombre, par un pointeur passif 113 prévu sur le support 110 (voir figure 7).

Plus précisément, à l'étape b) on éclaire ledit support 110 à l'aide de ladite source de lumière diffuse 121,122 desdits premiers moyens d'éclairement 120, à l'étape c) on recueille par ladite caméra numérique 134 la lumière transmise au travers dudit support 110 et à l'étape f) on traite le signal sortant de la caméra numérique 134 pour déterminer la position du pointeur passif 113A dans le référentiel fixe.

Bien entendu en variante, on peut prévoir qu'à l'étape e) on recueille un signal émis directement par le support 110 au niveau de la marque fixe 113A.

Ainsi selon ce procédé, comme le montre la figure 7, à l'étape f) on détermine le demi-écart interpupillaire en calculant la distance existant entre la position du milieu du nez de ladite monture M donnée par un des pointeurs passifs 113 dudit support 110 et la position du point central 12 de ladite lentille ophtalmique 10 situé au milieu du segment de droite reliant les deux repères permanents 16 correspondants de ladite lentille ophtalmique 10.

Selon ce procédé également , à l'étape f) on détermine la hauteur en calculant la distance existant entre la position du bord supérieur ou inférieur de ladite monture M (matérialisé par le bord 115A de la réglette 115 visualisé par la caméra numérique 134) et la position du point central 12 de ladite lentille ophtalmique 10 situé au milieu du segment de droite reliant les deux repères permanents 16 correspondants de ladite lentille ophtalmique 10 (voir figures 7 et 10).

Plus généralement le dispositif 100 peut mettre en oeuvre un procédé de détection automatique de diverses caractéristiques d'une lentille ophtalmique 10 pourvue de repères, qui comporte les étapes suivantes :
- la lentille ophtalmique 10 étant placée sur ledit support 110, on déplace le support 110 pour positionner ladite lentille dans une position de mesure,
- on éclaire à l'aide desdits premiers moyens d'éclairement ladite lentille et au moins au moins un pointeur passif dudit support 110,
- on recueille par lesdits moyens d'acquisition et d'analyse 130 un fichier numérique représentatif de l'image de la lentille 10,
- on désactive le filtre à motifs,
- on recueille par lesdits moyens d'acquisition et d'analyse 130 un fichier numérique représentatif de l'image de repérage formée, en ombre, par ledit pointeur passif,
- on traite les fichiers numériques recueillis, et
- on en déduit la position dudit support 110 et celle des repères de la lentille dans un référentiel fixe.

L'algorithme qui permet d'obtenir la position du support à partir de l'image capturée fonctionne de la manière suivante :
- on effectue une binarisation de l'image de repérage et on conserve uniquement les points d'intensité lumineuse supérieure à un seuil prédéfini,
- on effectue une opération de segmentation : on isole et numérote les différents objets obtenus par la binarisation (un objet est un amas de pixels contigus),
- on détermine les caractéristiques (taille, position du barycentre) des différents objets,
- on trie les objets en fonction de leur taille: on supprime les objets de taille largement plus grande et largement plus petite que la taille du ou des pointeurs passifs,
- on compare les objets restants à la forme théorique du ou des pointeurs passifs en effectuant une corrélation entre les objets conservés et un masque représentatif du ou des pointeurs passifs ; la corrélation est une opération bien connue en traitement d'image qui consiste à multiplier le masque représentatif avec l'objet ; la corrélation est maximale quand le masque et l'objet sont parfaitement identiques,
- on conserve les objets pour lesquels la corrélation est supérieure à un seuil prédéfini. Il ne reste normalement, à ce stade, plus que les objets correspondant au ou aux pointeurs passifs,
- on détermine la position du ou des pointeurs passif dans l'image à l'aide des barycentres des objets correspondant et précédemment calculée,
- on en déduit la position des pointeurs dans le référentiel fixe, car on connaît la transformation permettant de passer d'une position en pixel dans l'image à une position en millimètres dans le référentiel fixe, et
- on déduit de la position du ou des pointeurs passif la position du support.

La transformation permettant de passer d'une position en pixel dans l'image à une position en millimètres dans le référentiel fixe est définie lors de l'étalonnage du dispositif. On peut par exemple, pour déterminer cette transformation, utiliser une mire transparente positionnée sur le dispositif de détection sur laquelle une grille de pas connu est sérigraphiée. Cette mire est indexée par rapport à l'embout frontofocomètre, qui est l'origine du référentiel fixe. Chaque intersection de la grille correspond à un pixel bien déterminé et à une coordonnée bien déterminée dans le référentiel fixe. On a ainsi la transformation pixel/coordonnée dans référentiel fixe et on stocke cette transformation en mémoire.

Une fois que le dispositif 100 a localisé le pointeur passif 113 correspondant du support 110 et les repères permanents 16 de la lentille ophtalmique 10, il peut en déduire les valeurs des demi-écarts interpupillaire et de la hauteur de montage de la lentille ophtalmique montée sur la monture M.

Comme le montre la figure 5, l'opticien peut également utiliser le dispositif 100 pour simplement faire apparaître les repères permanents d'une lentille ophtalmique brute afin de marquer à l'aide d'un marqueur ces repères sur ladite lentille.

Lorsque le dispositif 100 fonctionne en mode tensiscope, le filtre à motifs 140 est désactivé et l'écran LCD forme alors un filtre polarisant.

L'opticien place à l'aide du support 110 la lentille ophtalmique montée sur sa monture M en regard desdits premiers moyens d'éclairement 120, et plus particulièrement entre les deux filtres polarisants amont 140 et aval 150. Il éclaire ladite lentille 10 et la caméra numérique 134 capture l'image de la lentille 10.

Ledit dispositif 100 peut donner alors une des trois informations suivantes :
- une information binaire indiquant que la lentille ophtalmique 10 est correctement montée sur sa monture M (c'est-à-dire sans contrainte) ;
- une information binaire indiquant que la lentille ophtalmique 10 est correctement montée sur sa monture M et dans le cas où la lentille est trop tendue, il indique à l'opticien la valeur de la reprise d'usinage à effectuer sur ladite lentille, et éventuellement la position angulaire de la reprise à effectuer lorsque celle-ci ne doit affecter qu'une portion de la périphérie de la lentille, pour que le montage de ladite lentille sur la monture M soit correct,
- il affiche l'image capturée de la lentille 10 sur un écran et l'opticien peut alors, à la vue de cette image, considéré si le montage est correct ou non, et le cas échéant décidé de la valeur de la reprise d'usinage à effectuer sur ladite lentille.

Enfin, avantageusement l'opticien peut utiliser le dispositif 100 décrit précédemment pour positionner et mesurer sur une lentille ophtalmique l'emplacement et éventuellement la forme des trous à effectuer pour monter les branches d'une monture sans cercle.

Il place sur le support 110 un gabarit de perçage et positionne ledit support 110 face auxdits premiers moyens d'éclairement 120. Il éclaire ce gabarit de perçage et obtient avec la caméra numérique 134 une image de celui-ci. Le dispositif 100 affiche alors sur un écran l'image obtenue de façon que l'opticien ait une simulation du montage à effectuer. Bien entendu les informations obtenues peuvent être envoyées à une perceuse non représentée qui effectue automatiquement les trous dans ladite lentille ophtalmique aux emplacements mesurés.

## Revendications

1. Dispositif (100) permettant de détecter automatiquement des repères d'une lentille ophtalmique (10 ;10'), comportant un support (110) adapté à recevoir ladite lentille (10 ;10') et, de part et d'autre de ce support (110), d'une part, des premiers moyens d'éclairement (120) de la lentille ophtalmique (10) installée sur ledit support (110) et, d'autre part, des premiers moyens d'acquisition et d'analyse (130) de la lumière transmise par ladite lentille (10 ;10'), **caractérisé en ce qu'**il comporte, entre lesdits premiers moyens d'éclairement (120) et ledit support (110), un filtre à motifs (140) activable et désactivable.

2. Dispositif (100) selon la revendication 1, **caractérisé en ce que** les premiers moyens d'acquisition et d'analyse (130) sont aptes à traiter le signal en sortie du filtre à motifs activé pour déterminer la position des repères permanents de la lentille ophtalmique.

3. Dispositif (100) selon l'une des revendications 1 ou 2, **caractérisé en ce qu'**il comprend deux filtres polarisants, l'un disposé entre lesdits premiers moyens d'éclairement (120) et ledit support (110), l'autre disposé entre ledit support (110) et lesdits premiers moyens d'acquisition et d'analyse (130).

4. Dispositif (100) selon l'une des revendications 1 à 3, **caractérisé en ce que** ledit filtre à motifs (140) est formé par un écran à cristaux liquides.

5. Dispositif (100) selon les revendications 3 et 4, **caractérisé en ce que** l'écran à cristaux liquides (140) forme également ledit filtre polarisant disposé entre lesdits premiers moyens d'éclairement (120) et ledit support (110).

6. Dispositif (100) selon l'une des revendications 3 et 5, **caractérisé en ce que** la polarisation des deux filtres est ménagée suivant une direction commune sensiblement identique à la direction de polarisation de la lentille à analyser.

7. Dispositif (100) selon l'une des revendications 1 à 6, **caractérisé en ce que** lesdits premiers moyens d'éclairement (120) sont activables et désactivables.

8. Dispositif (100) selon l'une des revendications 1 à 7, **caractérisé en ce qu'**il comprend des deuxièmes moyens d'éclairement (120') activables et désactivables, adaptés à éclairer une lentille ophtalmique (10') installée sur ledit support (110) en lumière rasante, lesdits premiers moyens d'acquisition et d'analyse (130) étant aptes à analyser le faisceau lumineux transmis par ladite lentille (10') éclairée en lumière rasante.

9. Dispositif (100) selon l'une des revendications 1 à 8, **caractérisé en ce que** lesdits premiers moyens d'acquisition et d'analyse (130) comprennent une caméra numérique (134).

10. Dispositif (100) selon la revendication 9, **caractérisé en ce que** lesdits premiers moyens d'acquisition et d'analyse (130) comprennent des moyens de traitement d'image adaptés à traiter le signal obtenu en sortie de la caméra (134) et des moyens d'affichage du signal traité.

11. Dispositif (100) selon les revendications 9 et 10, **caractérisé en ce que** lesdits premiers moyens d'acquisition et d'analyse (130) comprennent entre le filtre polarisant aval et la caméra (134) un système optique de renvoi de faisceaux lumineux comprenant une lentille convergente (131) et un miroir (132) incliné à 45°.

12. Dispositif (100) selon l'une quelconque des revendications précédentes, **caractérisé en ce qu'**il comprend un frontofocomètre incluant d'une part des troisièmes moyens d'éclairement (220) disposés latéralement par rapport auxdits premiers moyens d'éclairement (120), et adaptés à élaborer un faisceau lumineux dirigé sur une lentille ophtalmique installée sur ledit support positionné en regard desdits troisièmes moyens d'éclairement, et, d'autre part, des deuxièmes moyens d'acquisition et d'analyse (230) du faisceau lumineux transmis par ladite lentille installé sur ledit support.

13. Dispositif (100) selon la revendication 12, **caractérisé en ce que** le support (110) est déplaçable en translation suivant deux axes perpendiculaires.

14. Dispositif (100) selon la revendication 13, **caractérisé en ce qu'**il comporte des moyens de mesure du déplacement du support par rapport à une position initiale.

15. Dispositif (100) selon la revendication 14, **caractérisé en ce que** lesdits moyens de mesure comprennent des encodeurs incrémentaux.

16. Dispositif (100) selon l'une des 1 à 15, **caractérisé en ce que** ledit support (110) comporte au moins un pointeur passif qui, lorsqu'il est éclairé par lesdits premiers moyens d'éclairement (120), forme, en ombre, une image de repérage sur lesdits premiers moyens d'acquisition et d'analyse (130) permettant de déterminer la position dudit support (110) dans un référentiel fixe.

17. Dispositif (100) selon la revendication 16, **caractérisé en ce que** chaque pointeur passif présente une ligne de contour externe ou interne polygonale.

18. Dispositif (100) selon la revendication 17, **caractérisé en ce que** chaque pointeur passif présente une ligne de contour externe ou interne circulaire.

19. Dispositif (100) selon la revendication 17, **caractérisé en ce que** chaque pointeur passif présente une ligne de contour externe ou interne cruciforme.

## Patentansprüche

1. Vorrichtung (100) zur automatischen Ortung von Markierungen auf einem Brillenglas (10; 10'), die eine zur Aufnahme des Brillenglases (10; 10') geeignete Halterung (110) umfasst, und auf beiden Seiten dieser Halterung (110) zum einen erste Beleuchtungsmittel (120) für das auf der Halterung (110) installierte Brillenglas (10) und zum anderen erste Erfassungs - und Analysemittel (130) für das vom Brillenglas (10; 10') weitergeleitete Licht, **dadurch gekennzeichnet, dass** sie zwischen den ersten Beleuchtungsmitteln (120) und der Halterung (110) einen aktivier- und deaktivierbaren Musterfilter (140) umfasst.

2. Vorrichtung (100) nach Anspruch 1, **dadurch gekennzeichnet, dass** die ersten Erfassungs- und Analysemittel (130) das Ausgangssignal des aktivierten Musterfilters bearbeiten können, um die Position der permanenten Markierungen auf dem Brillenglas zu ermitteln.

3. Vorrichtung (100) nach einem der Ansprüche 1 oder 2, **dadurch gekennzeichnet, dass** sie zwei polarisierende Filter umfasst, wobei einer davon zwischen den ersten Beleuchtungsmitteln (120) und der Halterung (110) und der andere zwischen der Halterung (110) und den ersten Erfassungs- und Analysemitteln (130) angebracht ist.

4. Vorrichtung (100) nach einem der Ansprüche 1 bis 3, **dadurch gekennzeichnet, dass** der Musterfilter (140) aus einem Flüssigkristall-Display besteht.

5. Vorrichtung (100) nach den Ansprüchen 3 und 4, **dadurch gekennzeichnet, dass** der Flüssigkristall-Display (140) auch den polarisierenden Filter bildet, der zwischen den ersten Beleuchtungsmitteln (120) und der Halterung (110) angeordnet ist.

6. Vorrichtung (100) nach einem der Ansprüche 3 und 5, **dadurch gekennzeichnet, dass** die Polarisierung der beiden Filter entlang einer gemeinsamen Richtung verläuft, die in etwa der Polarisierungsrichtung des zu analysierenden Brillenglases entspricht.

7. Vorrichtung (100) nach einem der Ansprüche 1 bis 6, **dadurch gekennzeichnet, dass** die ersten Beleuchtungsmittel (120) aktivier- und deaktivierbar sind.

8. Vorrichtung (100) nach einem der Ansprüche 1 bis 7, **dadurch gekennzeichnet, dass** sie zweite aktivier- und deaktivierbare Beleuchtungsmittel (120') umfasst, die ein auf der Halterung (110) installiertes Brillenglas (10') mit einem Streiflicht beleuchten können, wobei die ersten Erfassungs- und Analysemittel (130) den vom mit Streiflicht beleuchteten Brillenglas (10') übertragenen Lichtstrahl analysieren können.

9. Vorrichtung (100) nach einem der Ansprüche 1 bis 8, **dadurch gekennzeichnet, dass** die ersten Erfassungs- und Analysemittel (130) eine Digitalkamera (134) umfassen.

10. Vorrichtung (100) nach Anspruch 9, **dadurch gekennzeichnet, dass** die ersten Erfassungs- und Analysemittel (130) Bildbearbeitungsmittel umfassen, die das Ausgangssignal der Kamera (134) bearbeiten können, sowie Mittel zum Anzeigen des bearbeiteten Signals.

11. Vorrichtung (100) nach den Ansprüchen 9 und 10, **dadurch gekennzeichnet, dass** die ersten Erfassungs- und Analysemittel (130) zwischen dem nachgestellten Polarisationsfilter und der Kamera (134) ein optisches Umleitsystem für Lichtstrahlen umfassen, das eine konvergierende Linse (131) und einen um 45° geneigten Spiegel (132) umfasst.

12. Vorrichtung (100) nach einem der vorausgehenden Ansprüche, **dadurch gekennzeichnet, dass** sie einen Frontfokusmesser umfasst, der zum einen dritte, in Bezug zu den ersten Beleuchtungsmitteln (120) seitlich angeordnete Beleuchtungsmittel (220) einschließt, die einen Lichtstrahl abgeben können, der auf ein Brillenglas, das auf der vor den dritten Beleuchtungsmitteln liegenden Halterung installiert ist, gerichtet ist, und zum anderen zweite Erfassungs- und Analysemittel (230) für den vom auf der Halterung installierten Brillenglas übertragenen Lichtstrahl.

13. Vorrichtung (100) nach Anspruch 12, **dadurch gekennzeichnet, dass** die Halterung (110) entlang zwei zueinander senkrechten Achsen verschoben werden kann.

14. Vorrichtung (100) nach Anspruch 13, **dadurch gekennzeichnet, dass** sie Messmittel zum Messen der Bewegung der Halterung in Bezug zu einer Ausgangsposition umfasst.

15. Vorrichtung (100) nach Anspruch 14, **dadurch gekennzeichnet, dass** die Messmittel Inkrementalgeber umfassen.

16. Vorrichtung (100) nach einem der Ansprüche 1 bis 15, **dadurch gekennzeichnet, dass** die Halterung (110) mindestens einen passiven Zeiger umfasst, der, wenn er von den ersten Beleuchtungsmitteln (120) beleuchtet wird, im Schatten ein Markierungszeichen auf den ersten Erfassungs- und Analysemitteln (130) bildet, wodurch die Position der Halterung (110) in einem festen Bezugssystem ermittelt werden kann.

17. Vorrichtung (100) nach Anspruch 16, **dadurch gekennzeichnet, dass** jeder passive Zeiger eine polygonale, externe oder interne Konturlinie aufweist.

18. Vorrichtung (100) nach Anspruch 17, **dadurch gekennzeichnet, dass** jeder passive Zeiger eine kreisrunde, externe oder interne Konturlinie aufweist.

19. Vorrichtung (100) nach Anspruch 17, **dadurch gekennzeichnet, dass** jeder passive Zeiger eine kreuzförmige, externe oder interne Konturlinie aufweist.

## Claims

1. A device (100) for automatically detecting markings of an ophthalmic lens (10; 10'), the device comprising a support (110) adapted to receive said lens (10; 10') and, on either side of said support (110), firstly first illumination means (120) for illuminating the ophthalmic lens (10) installed on said support (110), and secondly first acquisition and analysis means (130) for acquiring and analyzing the light transmitted through said lens (10; 10'), the device being **characterized in that** it includes an activatable and deactivatable pattern filter (140) between said first illumination means (120) and said support (110).

2. A device (100) according to claim 1, **characterized in that** the first acquisition and analysis means (130) are suitable for processing the signal output by the activated pattern filter in order to determine the positions of permanent markings of the ophthalmic lens.

3. A device (100) according to claim 1 or claim 2, **characterized in that** it includes two polarizing filters, one disposed between said first illumination means (120) and said support (110), and the other disposed between said support (110) and said first acquisition and analysis means (130).

4. A device (100) according to any one of claims 1 to 3, **characterized in that** said pattern filter (140) is formed by a liquid crystal screen.

5. A device (100) according to claims 3 and 4, **characterized in that** the liquid crystal screen (140) also forms said polarizing filter disposed between said first illumination means (120) and said support (110).

6. A device (100) according to claim 3 or claim 5, **characterized in that** the polarization of the two filters is arranged in a common direction substantially identical to the polarization direction of the lens to be analyzed.

7. A device (100) according to any one of claims 1 to 6, **characterized in that** said first and second illumination means (120) are activatable and deactivatable.

8. A device (100) according to any one of claims 1 to 7, **characterized in that** it includes activatable and deactivatable second illumination means (120') adapted to illuminate an ophthalmic lens (10') installed on said support (110) with light at grazing incidence, said first acquisition and analysis means (130) being suitable for analyzing the light beam transmitted through said lens (10') illuminated with light at grazing incidence.

9. A device (100) according to any one of claims 1 to 8, **characterized in that** said first acquisition and analysis means (130) comprise a digital camera (134).

10. A device (100) according to claim 9, **characterized in that** said first acquisition and analysis means (130) include image processor means adapted to process the signal obtained at the output from the camera (134) and means for displaying the processed signal.

11. A device (100) according to claims 9 and 10, **characterized in that** said first acquisition and analysis means (130) include an optical system between the downstream polarizing filter and the camera (134) for deflecting a light beam and comprising a converging lens (131) and a mirror (132) inclined at 45°.

12. A device (100) according to any preceding claim, **characterized in that** it has a frontofocometer including firstly third illumination means (220) disposed laterally relative to said first illumination means (120) and adapted to generate a light beam directed onto an ophthalmic lens installed on said support positioned facing said third illumination means, and secondly second acquisition and analysis means (230) for acquiring and analyzing the light beam transmitted through said lens installed on said support.

13. A device (100) according to claim 12, **characterized in that** the support (110) is displaceable in translation along two perpendicular axes.

14. A device (100) according to claim 13, **characterized in that** it includes means for measuring the displacement of the support relative to an initial position.

15. A device (100) according to claim 14, **characterized in that** said measurement means comprise incremental encoders.

16. A device (100) according to any one of claims 1 to 15, **characterized in that** said support (110) includes at least one passive pointer which, when illuminated by said first illumination means (120) forms, in shadow, a positioning image on said first acquisition and analysis means (130) enabling the position of said support (110) to be determined in a stationary frame of reference.

17. A device (100) according to claim 16, **characterized in that** each passive pointer presents an outer or inner contour line that is polygonal.

18. A device (100) according to claim 17, **characterized in that** each passive pointer presents an outer or inner contour line that is circular.

19. A device (100) according to claim 17, **characterized in that** each passive pointer presents an outer or inner contour line that is cruciform.
